# EUROPÄISCHE PATENTSCHRIFT

(11) **EP 3 290 247 B1**
(45) Veröffentlichungstag und Bekanntmachung des Hinweises auf die Patenterteilung: **17.07.2019**
(21) Anmeldenummer: 16187215.5
(22) Anmeldetag: 05.09.2016
(51) Int. Cl.: B60K 6/48, B60K 6/365, B60K 6/547, B60K 6/387, F16H 3/72, B60W 20/00, B60K 6/38

(54) **HYBRID-ANTRIEBSSTRANG FÜR EIN KRAFTFAHRZEUG UND VERFAHREN ZU DESSEN BETRIEB**
HYBRID DRIVETRAIN FOR A MOTOR VEHICLE AND METHOD FOR OPERATING THE SAME
GROUPE MOTOPROPULSEUR HYBRIDE POUR VÉHICULE AUTOMOBILE ET SON PROCÉDÉ DE FONCTIONNEMENT

(30) Priorität: 30.08.2016 DE 102016216313; 30.08.2016 DE 102016216314; 30.08.2016 DE 102016216315
(43) Veröffentlichungstag der Anmeldung: 07.03.2018
(73) Patentinhaber: Volkswagen Aktiengesellschaft, 38440 Wolfsburg (DE)
(72) Erfinder: Meißner, Christian, 38126 Braunschweig (DE); Schröder, Hendrik, 38173 Sickte (DE); Czapnik, Bartosch, 38118 Braunschweig (DE)

(56) Entgegenhaltungen:
- EP-A1- 1 640 202
- DE-A1-102008 051 305
- DE-A1-102010 035 206
- DE-A1-102010 047 638

## Beschreibung

Die Erfindung bezieht sich auf einen Hybrid-Antriebsstrang für ein Kraftfahrzeug, umfassend eine eingangsseitig mit einer Verbrennungskraftmaschine koppelbare Eingangsstufe und eine ausgangsseitig mit einem Differential gekoppelte oder koppelbare Hauptstufe, die in einem gemeinsamen Gehäuse angeordnet sind,
wobei die Eingangsstufe
- eine mit der Verbrennungskraftmaschine koppelbare Eingangsstufen-Eingangswelle,
- eine elektrische Maschine mit einem gehäusefesten Stator und einem rotierbar in dem Stator angeordneten Rotor und
- einen Eingangsstufen-Planetensatz mit einer mit dem Rotor gekoppelten Eingangsstufen-Sonne, einem mit der Eingangsstufen-Eingangswelle gekoppelten Eingangsstufen-Hohlrad und einem mit einer Eingangsstufen-Ausgangswelle gekoppelten Eingangsstufen-Steg, auf dem Eingangsstufen-Planeten, die mit der Eingangsstufen-Sonne und dem Eingangsstufen-Hohlrad kämmen, drehbar gelagert sind,
aufweist
und wobei die Hauptstufe
- eine mit der Eingangsstufen-Ausgangswelle gekoppelte Hauptstufen-Eingangswelle,
- einen Ravigneaux-Satz mit einer ersten Hauptstufen-Sonne, einer zweiten Hauptstufen-Sonne, einem Hauptstufen-Hohlrad und einem Hauptstufen-Steg, auf dem ein Satz erster Hauptstufen-Planeten und ein Satz zweiter Hauptstufen-Planeten drehbar gelagert sind, wobei die ersten Hauptstufen-Planeten einerseits mit der ersten Hauptstufen-Sonne und andererseits mit dem Hauptstufen-Hohlrad und die zweiten Hauptstufen-Planeten einerseits mit den ersten Hauptstufen-Planeten und andererseits mit der zweiten Hauptstufen-Sonne kämmen, und
- eine mit einem Differential gekoppelte oder koppelbare Hauptstufen-Ausgangswelle aufweist, welche mit dem Hauptstufen-Steg drehfest verbunden ist, wobei das Hauptstufen-Hohlrad mittels einer ersten Bremse und die zweite Hauptstufen-Sonne mittels einer zweiten Bremse am Gehäuse festlegbar ist.

Die Erfindung bezieht sich weiter auf ein Verfahren zum Betrieb eines solchen Antriebsstrangs.

Ein derartiger Hybrid-Antriebsstrang ist bekannt aus der EP 1 640 202 A1 und der DE 10 2010 047638 A1.

Bei der Auslegung moderner Hybrid-Antriebsstränge für Kraftfahrzeuge ist man bestrebt, eine hinreichende Anzahl von Gängen und Betriebsmodi zur Verfügung zu stellen, um allen denkbaren Fahrsituationen in möglichst energieeffizienter und für den Benutzer komfortabler Weise gerecht werden zu können. Dies gilt in besonderer Weise für Kraftfahrzeuge des besonders leistungsorientierten Segments, wie z.B. für Sportwagen. Häufig ist ein solcher Antriebsstrang daher mit mehreren Stufen ausgebildet, wobei den unterschiedlichen Stufen unterschiedliche funktionale Aufgaben zukommen. Allen Konzepten gemeinsam ist jedoch der Wunsch nach einer möglichst hohen Leistungsdichte, d.h. nach hoher Leistung bei zugleich geringen Bauraumanforderungen, was im Hinblick auf die oft große Anzahl von Schaltelementen, wie Bremsen und Kupplungen, Getriebeelementen, wie Planetensätzen, und Antriebsaggregaten, wie elektrischen Maschinen, jedoch oft schwer zu realisieren ist.

Die o.g., gattungsbildende Druckschrift EP 1 640 202 A1 offenbart einen Hybrid-Antriebsstrang, dessen Eingangsstufe einen Eingangsstufen-Planetensatz und eine erste elektrische Maschine umfasst. Eingangsseitig ist diese Eingangsstufe mittels ihrer Eingangsstufen-Eingangswelle mit einer Verbrennungskraftmaschine, insbesondere über deren Kurbelwelle, koppelbar. Ausgangsseitig ist die Eingangsstufe über ihre Eingangsstufen-Ausgangswelle mit einer nachfolgenden Hauptstufe gekoppelt, deren Hauptstufen-Ausgangswelle wiederum mit einem Differential koppelbar bzw. gekoppelt ist. Die bekannte Hauptstufe enthält einen Ravigneaux-Satz, dessen Hauptstufen-Steg mit der Hauptstufen-Eingangswelle verbunden ist, die als Zentralwelle die gesamte Hauptstufe durchsetzt und ausgangsseitig auch deren Hauptstufen-Ausgangswelle bildet. Auf dem Hauptstufen-Steg sind zwei Sätze von Hauptstufen-Planeten gelagert. Ein Satz erster Hauptstufen-Planeten, ausgebildet als Kurzplaneten, kämmt mit dem Hauptstufen-Hohlrad und der ersten Hauptstufen-Sonne. Ein Satz zweiter Hauptstufen-Planeten, ausgebildet als Langplaneten, kämmt mit der zweiten Hauptstufen-Sonne und den ersten Hauptstufen-Planeten. Das Hauptstufen-Hohlrad und die zweite Hauptstufen-Sonne sind mittels je einer Bremse am Getriebegehäuse festlegbar. Die erste Sonne ist mit dem Rotor einer zur Hauptstufe gehörigen, zweiten elektrischen Maschine verbunden. Wird (nur) das Hauptstufen-Hohlrad gebremst, kann Moment der zweiten elektrischen Maschine in parallelhybrider Weise mit einer ersten Übersetzung ein-bzw. ausgespeist werden; wird (nur) die zweite Hauptstufen-Sonne gebremst, kann Moment der zweiten elektrischen Maschine in parallelhybrider Weise mit einer zweiten Übersetzung ein- bzw. ausgespeist werden. Zusätzlich lässt sich mit der bekannten Eingangsstufe eine stufenlose Vor-Übersetzung des von der Verbrennungskraftmaschine über das Eingangsstufen-Hohlrad eingeleiteten Drehmomentes realisieren, indem von der ersten elektrischen Maschine ein variables Drehmoment eingeleitet wird bzw. eine variable Drehmomentabstützung an der Eingangsstufen-Sonne erfolgt. Sind beide Bremsen der Hauptstufe geöffnet, ist die zweite elektrische Maschine abgekoppelt und der Antrieb erfolgt allein über die Verbrennungskraftmaschine und die erste elektrische Maschine in der Eingangsstufe. Andere als diese Modi und Gänge sind mit der bekannten Hauptstufe nicht darstellbar.

Nachteilig bei dieser Anordnung ist, dass die Anzahl der realisierbaren Gänge bzw. Betriebsmodi nicht ausreicht, um bei einer leistungsstarken Motorisierung über den gesamten Fahrzeug-Geschwindigkeitsbereich einen effizienten Betrieb des Antriebsstrangs zu gewährleisten.

Es ist die Aufgabe der vorliegenden Erfindung, einen gattungsgemäßen Hybrid-Antriebsstrang derart weiterzubilden, dass eine größere Anzahl von Gängen bzw. Betriebsmodi zur Verfügung steht.

Diese Aufgabe wird in Verbindung mit den Merkmalen des Oberbegriffs von Anspruch 1 dadurch gelöst, dass die Hauptstufen-Eingangswelle mittels einer ersten Hauptstufen-Kupplung mit der ersten Hauptstufen-Sonne und mittels einer zweiten Hauptstufen-Kupplung mit dem Hauptstufen-Hohlrad gekoppelt ist.

Bevorzugte Ausführungsformen der Erfindung sind Gegenstand der abhängigen Patentansprüche.

Durch die erfindungsgemäße Einführung zweier Kupplungen in die Hauptstufe lassen sich unabhängig von der konkreten Ausgestaltung der Eingangsstufe vier unterschiedliche Schaltkonstellationen allein in der Hauptstufe realisieren, deren Anzahl zur Berechnung der Gesamtanzahl von Betriebsmodi bzw. Gängen mit der Anzahl der Schaltkonstellationen der Eingangsstufe zu multiplizieren wäre:
Bei geschlossener erster Hauptstufen-Kupplung, geschlossener erster Bremse und ansonsten geöffneten Hauptstufen-Schaltelemente wird ein über die Hauptstufen-Eingangswelle eingeleitetes Drehmoment über die geschlossene erste Hauptstufen-Kupplung und die erste Hauptstufen-Sonne in den Ravigneaux-Satz eingeleitet, der aufgrund des über die erste Bremse festgelegten Hauptstufen-Hohlrades als einfache Übersetzungsstufe wirkt. Das übersetzte Moment wird über den Hauptstufen-Steg an die Hauptstufen-Ausgangswelle und über diese an den weiteren Abtrieb, insbesondere das Differential, geleitet.

Bei geschlossener erster Hauptstufen-Kupplung, geschlossener zweiter Bremse und im Übrigen geöffneten Hauptstufen-Schaltelementen wird ein über die Hauptstufen-Eingangswelle eingeleitetes Moment über die erste Hauptstufen-Kupplung und die erste Hauptstufen-Sonne in den Ravigneaux-Satz eingeleitet. Dieser wirkt aufgrund der über die zweite Bremse festgelegten zweiten Hauptstufen-Sonne als reine Übersetzungsstufe, jedoch mit anderem Übersetzungsverhältnis als im vorgenannten Fall. Das übersetzte Moment wird über den Hauptstufen-Steg an die Ausgangswelle und über diese an weitere Abtriebskomponenten, insbesondere das Differential, geleitet.

Bei geschlossener erster und zweiter Hauptstufen-Kupplung und geöffneten Bremsen ist der Ravigneaux-Satz verblockt und läuft mit der Drehzahl der Hauptstufen-Eingangswelle um. Folglich rotiert auch die Hauptstufen-Ausgangswelle in diesem Direktgang mit der Hauptstufen-Eingangsdrehzahl. Das Moment wird über den Hauptstufen-Steg an die Ausgangswelle und über diese an die weiteren Abtriebskomponenten, insbesondere das Differential, geleitet.

Bei geschlossener zweiter Hauptstufen-Kupplung, geschlossener zweiter Bremse und im Übrigen geöffneten Hauptstufen-Schaltelementen wird ein über die Hauptstufen-Eingangswelle eingeleitetes Drehmoment über die zweite Hauptstufen-Kupplung und das Hauptstufen-Hohlrad in den Ravigneaux-Satz eingeleitet. Die Momentenabstützung erfolgt über die mittels der zweiten Bremse am Getriebegehäuse festgelegten zweiten Hauptstufen-Sonne. Das übersetzte Moment wird über den Hauptstufen-Steg an die Ausgangswelle und über diese an die weiteren Abtriebskomponenten, insbesondere das Differential, geleitet.

Um die Anzahl der insgesamt realisierbaren Gänge zu erhöhen und eine größere Vielfalt von Betriebsmodi zu erlauben, ist bei einer Weiterbildung der Erfindung vorgesehen, dass der Rotor mittels einer ersten Eingangsstufen-Kupplung mit der Eingangsstufen-Sonne und mittels einer zweiten Eingangsstufen-Kupplung mit dem Eingangsstufen-Steg gekoppelt ist. Hierdurch lassen sich drei Schaltkonstellationen der Eingangsstufe kombinieren, von denen zwei hinsichtlich der resultierenden Übersetzung gleich sind, jedoch einen parallelhybriden und einen rein elektrischen Betriebsmodus unterscheiden, während die dritte Schaltkonstellation einen stufenlosen Betrieb des Antriebsstrangs ermöglicht:
Bei geschlossener erster Eingangsstufen-Kupplung und geöffneter zweiter Eingangsstufen-Kupplung arbeitet das System in einem stufenlosen Betriebsmodus. Das Moment der Verbrennungskraftmaschine wird über das Eingangsstufen-Hohlrad in den Eingangsstufen-Planetensatz ein- und über den Eingangsstufen-Steg ausgeleitet, wobei die elektrische Maschine über die Eingangsstufen-Sonne eine variable Momentenabstützung und daher eine stufenlos variable Übersetzungsänderung bietet. Diese Eingangsstufen-Schaltkonstellation liefert in Kombination mit den oben genannten vier Hauptstufen-Schaltkonstellationen die vier ungeraden Gängen des Gesamt-Antriebsstrangs.

Bei geschlossener erster Eingangsstufen-Kupplung und geschlossener zweiter Eingangsstufen-Kupplung arbeitet das System in einem parallelhybriden Betriebsmodus. In diesem Modus sind die Eingangsstufen-Sonne und der Eingangsstufen-Steg des Eingangsstufen-Planetensatzes drehfest miteinander verbunden, sodass der gesamte Eingangsstufen-Planetensatz als Block mit der Drehzahl der Verbrennungskraftmaschine umläuft. Dies gilt auch für den Rotor der elektrischen Maschine, die auf diese Weise nach bekanntem parallelhybriden Prinzip motorisch oder generatorisch betrieben werden kann. Diese Eingangsstufen-Schaltkonstellation liefert in Kombination mit den oben genannten vier Hauptstufen-Schaltkonstellationen die vier geraden Gängen des Gesamt-Antriebsstrangs.

Dieselben geraden Gänge, jedoch in einem rein elektrischen Betriebsmodus, lassen sich mit geöffneter zweiter Eingangsstufen-Kupplung und geschlossener zweiter Eingangsstufen-Kupplung realisieren. Hier ist die Verbrennungskraftmaschine abgekoppelt und die elektrische Maschine wirkt als einziges Antriebsaggregat, deren Moment über die zweite Eingangsstufen-Kupplung auf die Eingangsstufen-Ausgangswelle gebracht wird.

Zur Auslegung der einzelnen Übersetzungselemente hat es sich als günstig erwiesen, wenn die Standübersetzung des Eingangsstufen-Planetensatzes negativ ist, d.h. der Eingangsstufen-Steg lediglich einen einfachen Satz Planeten trägt. Dies ist unter Bauraum- und Komplexitätserwägungen günstig, erübrigt eine zusätzliche Drehrichtungs-Umkehrstufe und ermöglicht die Gestaltung der ersten Hauptstufen-Planeten als Lang- und der zweiten Hauptstufen-Planeten als Kurzplaneten, wie bevorzugt vorgesehen.
Als für die Auslegung weiter günstig hat sich erwiesen, wenn die Standübersetzungen des Eingangsstufen-Planetensatzes und des ersten Teilsatzes des Ravigneaux-Satzes, umfassend das Hauptstufen-Hohlrad, die ersten Hauptstufen-Planeten und die erste Hauptstufen-Sonne, gleich sind.

Um eine optimale Gangstaffelung zu erzielen wird dies bevorzugt davon begleitet, dass die Standübersetzung des zweiten Teilsatzes des Ravigneaux-Satzes, umfassend das Hauptstufen-Hohlrad, die zweiten Hauptstufen-Planeten und die zweite Hauptstufen-Sonne, positiv ist und betragsmäßig dem 1,5-fachen der Standübersetzung des ersten Teilsatzes des Ravigneaux-Satzes entspricht.

Die bevorzugte Auslegung sieht vor, dass die Standübersetzung des Eingangsstufen-Planetensatzes und die Standübersetzung des ersten Teilsatzes des Ravigneaux-Satzes ca. -1,8 und die Standübersetzung des zweiten Teilsatzes des Ravigneaux-Satzes ca. +2,7 beträgt.

Die angegebenen Werte und Relationen sind nicht als exakte Absolutangaben, sondern mit Konstruktions- und Fertigungstoleranzen von ca. 10% zu verstehen, wenngleich die exakte Einhaltung dieser Vorgaben als besonders vorteilhaft angesehen wird
Ein Antriebsstrang wie beschrieben ermöglicht im eingebauten Zustand, mit an seiner Eingangsstufen-Eingangswelle angekoppelter Verbrennungskraftmaschine, seinen Betrieb gemäß einem besonders vorteilhaften und als eigenständige Erfindung anzusehenden Verfahren, welches sich dadurch auszeichnet, dass der Antriebsstrang jeweils temporär
- mit geschlossener erster Eingangsstufen-Kupplung, geöffneter zweiter Eingangsstufen-Kupplung, geschlossener erster Bremse, geöffneter zweiter Bremse, geschlossener erster Hauptstufen-Kupplung und geöffneter zweiter Hauptstufen-Kupplung hybrid in einem ersten Gang,
- mit geschlossener erster Eingangsstufen-Kupplung, geschlossener zweiter Eingangsstufen-Kupplung, geschlossener erster Bremse, geöffneter zweiter Bremse, geschlossener erster Hauptstufen-Kupplung und geöffneter zweiter Hauptstufen-Kupplung hybrid in einem zweiten Gang,
- mit geschlossener erster Eingangsstufen-Kupplung, geöffneter zweiter Eingangsstufen-Kupplung, geöffneter erster Bremse, geschlossener zweiter Bremse, geschlossener erster Hauptstufen-Kupplung und geöffneter zweiter Hauptstufen-Kupplung hybrid in einem dritten Gang,
- mit geschlossener erster Eingangsstufen-Kupplung, geschlossener zweiter Eingangsstufen-Kupplung, geöffneter erster Bremse, geschlossener zweiter Bremse, geschlossener erster Hauptstufen-Kupplung und geöffneter zweiter Hauptstufen-Kupplung hybrid in einem vierten Gang,
- mit geschlossener erster Eingangsstufen-Kupplung, geöffneter zweiter Eingangsstufen-Kupplung, geöffneter erster Bremse, geöffneter zweiter Bremse, geschlossener erster Hauptstufen-Kupplung und geschlossener zweiter Hauptstufen-Kupplung hybrid in einem fünften Gang,
- mit geschlossener erster Eingangsstufen-Kupplung, geschlossener zweiter Eingangsstufen-Kupplung, geöffneter erster Bremse, geöffneter zweiter Bremse, geschlossener erster Hauptstufen-Kupplung und geschlossener zweiter Hauptstufen-Kupplung hybrid in einem sechsten Gang,
- mit geschlossener erster Eingangsstufen-Kupplung, geöffneter zweiter Eingangsstufen-Kupplung, geöffneter erster Bremse, geschlossener zweiter Bremse, geöffneter erster Hauptstufen-Kupplung und geschlossener zweiter Hauptstufen-Kupplung hybrid in einem siebten Gang und
- mit geschlossener erster Eingangsstufen-Kupplung, geschlossener zweiter Eingangsstufen-Kupplung, geöffneter erster Bremse, geschlossener zweiter Bremse, geöffneter erster Hauptstufen-Kupplung und geschlossener zweiter Hauptstufen-Kupplung hybrid in einem achten Gang,
betrieben wird.

Dieses Betriebsverfahren, das lediglich die oben bereits näher erläuterten, hybriden Gänge betrifft, ist selbstverständlich, wie weiter unten noch näher ausgeführt werden soll, durch die Anwendung der oben ebenfalls bereits erläuterten, rein elektrischen Gänge erweiterbar.

Zum Hochschalten aus einem ungeraden, hybriden Gang in den nächsthöheren geraden, hybriden Gang wird bevorzugt zunächst die Drehzahl der Verbrennungskraftmaschine auf das nach der Schaltung benötigte Drehzahlniveau abgesenkt, während zugleich die Drehzahl der elektrischen Maschine entsprechend erhöht wird, wonach die zweite Eingangsstufen-Kupplung schlupfend geschlossen und dabei die Drehzahl der elektrischen Maschine dem Drehzahlniveau der Verbrennungskraftmaschine angepasst wird. Der Begriff "entsprechend" bezieht sich hier auf die notwendige Regelung, d.h. die Abstimmung zwischen den Drehzahlniveaus zur Beibehaltung der vom Fahrer angeforderten Fahrzeuggeschwindigkeit. Mit dem genannten Hochschalt-Verfahren lässt sich bei geeignetem Kupplungs-Management eine nahezu zugkraftunterbrechungsfreie Schaltung realisieren.

Zum Runterschalten aus einem geraden, hybriden Gang in den nächstniedrigeren ungeraden, hybriden Gang wird bevorzugt zunächst die zweite Eingangsstufen-Kupplung schlupfend geöffnet und dabei die Drehzahl der Verbrennungskraftmaschine auf das nach der Schaltung benötigte Drehzahlniveau angehoben, während zugleich die Drehzahl der elektrischen Maschine entsprechend abgesenkt wird. Zum Begriff "entsprechend" siehe die obige Erläuterung.

Der erfindungsgemäße Antriebsstrang ermöglicht zudem ein hybrides Anfahren im sog. geared-neutral-Modus, d.h. ohne Kupplungsbetätigung. Hierzu ist vorgesehen, dass, ausgehend von einem Zustand, in dem die Drehzahl der elektrischen Maschine derart an die Drehzahl der Verbrennungskraftmaschine angepasst ist, dass die Eingangsstufen-Ausgangswelle steht, was in sämtlichen ungeraden (stufenlos variablen) Gängen möglich, beim Anfahren jedoch insbesondere im ersten Gang sinnvoll nutzbar ist, die Drehzahl der elektrischen Maschine in Abhängigkeit von der Drehzahl der Verbrennungskraftmaschine derart geregelt wird, dass die Eingangsstufen-Ausgangswelle in kontinuierlich beschleunigte Rotation versetzt wird (die dann auf die weiteren Abtriebskomponenten übertragen wird, sodass das Fahrzeug anfährt). Da die elektrische Maschine typischerweise drehmomentgeregelt betrieben wird, wird es normalerweise notwendig sein, die elektrische Maschine vor Durchführung des erläuterten Anfahr-Verfahrens auf Drehzahlregelung umzustellen, was nach erfolgtem Anfahren wieder rückgängig gemacht werden kann.

Zur Erweiterung des Betriebs um die oben bereits erläuterten, rein elektrischen Gänge ist bevorzugt vorgesehen, dass der Antriebsstrang jeweils temporär
- mit geöffneter erster Eingangsstufen-Kupplung, geschlossener zweiter Eingangsstufen-Kupplung, geschlossener erster Bremse, geöffneter zweiter Bremse, geschlossener erster Hauptstufen-Kupplung und geöffneter zweiter Hauptstufen-Kupplung elektrisch im zweiten Gang,
- mit geöffneter erster Eingangsstufen-Kupplung, geschlossener zweiter Eingangsstufen-Kupplung, geöffneter erster Bremse, geschlossener zweiter Bremse, geschlossener erster Hauptstufen-Kupplung und geöffneter zweiter Hauptstufen-Kupplung elektrisch im vierten Gang,
- mit geöffneter erster Eingangsstufen-Kupplung, geschlossener zweiter Eingangsstufen-Kupplung, geöffneter erster Bremse, geöffneter zweiter Bremse, geschlossener erster Hauptstufen-Kupplung und geschlossener zweiter Hauptstufen-Kupplung elektrisch im sechsten Gang,
- mit geöffneter erster Eingangsstufen-Kupplung, geschlossener zweiter Eingangsstufen-Kupplung, geöffneter erster Bremse, geschlossener zweiter Bremse, geöffneter erster Hauptstufen-Kupplung und geschlossener zweiter Hauptstufen-Kupplung elektrisch im achten Gang,
betrieben wird.

Neben geared-neutral-Anfahren im ersten (hybriden) Gang ist auch ein rein elektrisches Anfahren im zweiten (elektrischen) Gang möglich. Abgesehen von wenigen Ausnahmesituationen wird jedoch zum weiteren Betrieb die Zuschaltung der Verbrennungskraftmaschine erforderlich werden. Dies kann aus dem zweiten (elektrischen) Gang mit stehender Verbrennungskraftmaschine heraus dadurch erfolgen, dass zum Starten der Verbrennungskraftmaschine zunächst die erste Hauptstufen-Kupplung zum schlupfenden Betrieb geöffnet wird, während die Drehzahl der elektrischen Maschine entsprechend erhöht wird (Drehzahlregelung), und sodann die erste Hauptstufen-Kupplung geschlossen und die elektrische Maschine auf eine Drehmomentregelung umgeschaltet wird. Die Drehzahlerhöhung der elektrischen Maschine bei schlupfendem Betrieb der ersten Hauptstufen-Kupplung dient dem Aufbau eines Puffers an kinetischer Energie in der elektrischen Maschine ohne dabei die Fahrzeuggeschwindigkeit zu ändern. Beim Schließen der ersten Hauptstufen-Kupplung kann die überschüssige kinetische Energie dann zum Drehen der Verbrennungskraftmaschine genutzt werden - wiederum ohne Änderung der Fahrzeuggeschwindigkeit. Nach dem Start der Verbrennungskraftmaschine, der nach wenigen Umdrehungen erfolgt, wird die Regelung der elektrischen Maschine wieder auf die übliche Momentenregelung zurück geschaltet.

Weitere Merkmale und Vorteile der Erfindung ergeben sich aus der nachfolgenden, speziellen Beschreibung und den Zeichnungen.

Es zeigt:

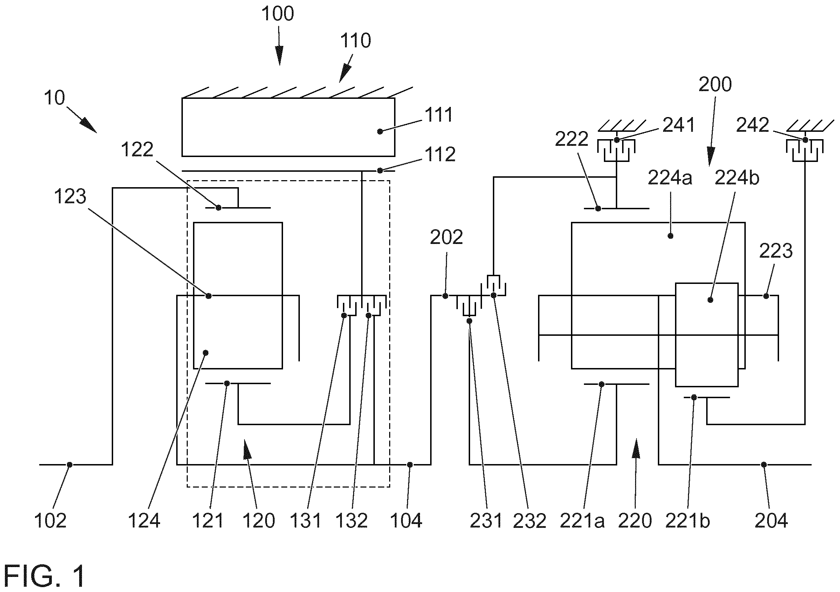

- Figur 1:: eine schematische Darstellung der Topologie des erfindungsgemäßen Antriebsstrangs.

Figur 1 zeigt in stark schematisierter Darstellung die Topologie einer Ausführungsform des erfindungsgemäßen Antriebsstrangs 10. Der Antriebsstrang 10 umfasst eine Eingangsstufe 100 und eine Hauptstufe 200.

Die Eingangsstufe 100 umfasst eingangsseitig eine Eingangsstufen-Eingangswelle 102, ausgangsseitig eine Eingangsstufen-ausgangswelle 104, eine elektrische Maschine 110 mit einem gehäusefesten Stator 111 und einem drehbar dazu gelagerten, innenliegenden Rotor 112 sowie einen Eingangsstufen-Planetensatz 120, der bei der gezeigten Ausführungsform als einfacher Planetensatz mit einer Eingangsstufen-Sonne 121, einem Eingangsstufen-Hohlrad 122 und einem Eingangsstufen-Steg 123 ausgebildet ist, auf welch letzterem ein Satz Eingangsstufen-Planeten 124 drehbar gelagert ist und einerseits mit der Eingangsstufen-Sonne 121 und andererseits mit dem Eingangsstufen-Hohlrad 122 kämmen.

Die Eingangsstufen-Eingangswelle 102 ist mit dem Eingangsstufen-Hohlrad 122 fest verbunden. Die Eingangsstufen-Ausgangswelle 104 ist mit dem Eingangsstufen-Steg 123 fest verbunden. Der Rotor 112 der elektrischen Maschine 110 ist über eine erste Eingangsstufen-Kupplung 131 mit der Eingangsstufen-Sonne 121 gekoppelt. Zudem ist er über eine zweite Eingangsstufen-Kupplung 132 mit der Eingangsstufen-Ausgangswelle 104 gekoppelt. Die Eingangsstufen-Kupplungen 131, 132 sind einander axial benachbart angeordnet und gemeinsam dem Eingangsstufen-Planetensatz 120 axial benachbart angeordnet. Insbesondere ist der Eingangsstufen-Planetensatz 120 eingangsseitig in der Eingangsstufe 100 und die zweite Eingangsstufen-Kupplung 132 ausgangsseitig in der Eingangsstufe 100 angeordnet. Die erste Eingangsstufen-Kupplung 131 ist axial zwischen dem Eingangsstufen-Planetensatz 120 und der zweiten Eingangsstufen-Kupplung 132 angeordnet. Bei der gezeigten Ausführungsform sind der Eingangsstufen-Planetensatz 120 sowie die beiden Eingangsstufen-Kupplungen 131, 132 sowohl axial als auch radial vollständig innerhalb des Rotors 112 angeordnet, wie dies in Figur 1 durch den punktiert dargestellten Kasten angedeutet ist.

Die Hauptstufe 200 umfasst eingangsseitig eine Hauptstufen-Eingangswelle 202 und ausgangsseitig eine Hauptstufen-Ausgangswelle 204. Zudem umfasst die Hauptstufe 200 einen als Ravigneaux-Satz ausgebildeten Hauptstufen-Planetensatz 220 mit einer ersten Hauptstufen-Sonne 221a, einer zweiten Hauptstufen-Sonne 221b, einem Hauptstufen-Hohlrad 222 und einem Hauptstufen-Steg 223. Auf dem Hauptstufen-Steg 223 sind zwei Sätze von Hauptstufen-Planeten drehbar gelagert. Ein erster Satz Langplaneten 224a kämmt einerseits mit der ersten Hauptstufen-Sonne 221a und andererseits mit dem Hauptstufen-Hohlrad 222. Ein zweiter Satz Kurzplaneten kämmt einerseits mit der zweiten Hauptstufen-Sonne 221b und andererseits mit den Langplaneten 224a.

Auf der Hauptstufen-Eingangswelle 202 ist ein Kupplungsträger dreh- und axial fest fixiert. Er trägt die erste Hauptstufen-Kupplung 231 und die zweite Hauptstufen-Kupplung 232. Über eine erste Hauptstufen-Kupplung 231 ist die Hauptstufen-Eingangswelle 202 mit der ersten Hauptstufen-Sonne 221a gekoppelt. Über eine zweite Hauptstufen-Kupplung 232 ist die Hauptstufen-Eingangswelle 202 mit dem Hauptstufen-Hohlrad 222 gekoppelt. Das Hauptstufen-Hohlrad 222 ist außerdem über eine erste Bremse 241 am Getriebegehäuse festlegbar. Die Hauptstufen-Ausgangswelle 204 ist mit dem Hauptstufen-Steg 223 fest verbunden. Die zweite Hauptstufen-Sonne 221b ist über eine zweite Bremse 242 am Getriebegehäuse festlegbar.

In Montageendstellung im Kraftfahrzeug ist die Eingangsstufen-Eingangswelle 102 typischerweise über ein Zwei-Massen-Schwungrad mit der Kurbelwelle einer Verbrennungskraftmaschine verbunden. Die Eingangsstufen-Ausgangswelle 104 ist mit der Hauptstufen-Eingangswelle 202 verbunden. Die Hauptstufen-Ausgangswelle 204 ist mit weiteren Abtriebskomponenten, insbesondere einem Differential, verbunden.

Mit dem Antriebsstrang der in Figur 1 gezeigten Topologie lassen sich acht lastschaltbare, hybride Gänge, von denen 4 parallelhybrider Natur und 4 stufenloser Natur sind, sowie vier lastschaltbare rein elektrische Gänge realisieren.

Hierzu bietet die Hauptstufe 200 vier unterschiedliche Schaltkonstellationen ihrer Schaltelemente, nämlich:
- Geschlossene erste Hauptstufen-Kupplung 231, geschlossene erste Bremse 241 und ansonsten geöffnete Hauptstufen-Schaltelemente. In dieser Schaltkonstellation wird ein von der Eingangsstufe 100 eingeleitetes Drehmoment über die geschlossene erste Hauptstufen-Kupplung 231 und die erste Hauptstufen-Sonne 221a in den Ravigneaux-Satz 220 eingeleitet, der aufgrund des über die erste Bremse 241 festgelegten Hohlrades 222 als einfache Übersetzungsstufe wirkt. Das übersetzte Moment wird über den Hauptstufen-Steg 223 an die Hauptstufen-Ausgangswelle 204 und über diese an den weiteren Abtrieb geleitet.
- Geschlossene erste Hauptstufen-Kupplung 231, geschlossene zweite Bremse 242 und im Übrigen geöffnete Hauptstufen-Schaltelemente. Bei dieser Schaltkonstellation wird ein von der Eingangsstufe 100 über die Hauptstufen-Eingangswelle 202 eingeleitetes Moment über die erste Hauptstufen-Kupplung 231 und die erste Hauptstufen-Sonne 221a in den Ravigneaux-Satz 220 eingeleitet. Dieser wirkt aufgrund der über die zweite Bremse 242 festgelegten zweiten Hauptstufen-Sonne 221b als reine Übersetzungsstufe, jedoch mit anderem Übersetzungsverhältnis als im vorgenannten Fall. Das übersetzte Moment wird über den Hauptstufen-Steg 223 an die Hauptstufen-Ausgangswelle 204 und über diese an weitere Abtriebskomponenten geleitet.
- Geschlossene erste und zweite Hauptstufen-Kupplung 231, 232 und geöffnete Bremsen 241, 242. Bei dieser Schaltkonstellation ist der Ravigneaux-Satz 220 verblockt und läuft mit der Drehzahl der Hauptstufen-Eingangswelle 202 um. Folglich rotiert auch die Hauptstufen-Ausgangswelle 204 in diesem Direktgang mit der Eingangsdrehzahl.
- Geschlossene zweite Hauptstufen-Kupplung 232, geschlossene zweite Bremse 242 und im Übrigen geöffnete Hauptstufen-Schaltelemente. Bei dieser Schaltkonstellation wird ein von der Eingangsstufe 100 über die Hauptstufen-Eingangswelle 202 eingeleitetes Drehmoment über die zweite Hauptstufen-Kupplung 232 und das Hauptstufen-Hohlrad 222 in den Ravigneaux-Satz 220 eingeleitet. Die Momentenabstützung erfolgt über die mittels der zweiten Bremse 242 am Getriebegehäuse festgelegten zweiten Hauptstufen-Sonne 221b. Das übersetzte Moment wird über den Hauptstufen-Steg 223 an die Hauptstufen-Ausgangswelle 204 und über diese an die weiteren Abtriebskomponenten geleitet.

Mittels der Eingangsstufe 100 lassen sich mit drei Schaltkonstellationen zwei unterschiedliche Übersetzungsverhältnisse und insgesamt drei unterschiedliche Betriebsmodi realisieren, die mit den zuvor erläuterten vier Gängen der Hauptstufe 200 jeweils kombinierbar sind. Es sind dies:
- Geschlossene erste Eingangsstufen-Kupplung 131 und geschlossene zweite Eingangsstufen-Kupplung 132. Bei dieser Schaltkonstellation sind die Eingangsstufen-Sonne 121 und der Eingangsstufen-Steg 123 des Eingangsstufen-Planetensatzes 120 aneinander festgelegt, sodass der Eingangsstufen-Planetensatz 120 als Block mit der Drehzahl der Eingangsstufen-Eingangswelle 102 umläuft. Ein zusätzliches Drehmoment der elektrischen Maschine (positiv oder negativ) kann in bekannter parallelhybrider Weise über die geschlossene zweite Eingangsstufen-Kupplung 132 auf die Eingangsstufen-Ausgangswelle 104 gegeben werden. Gemeinsam mit den vier in der Hauptstufe 200 realisierbaren Gängen ergeben sich also vier parallelhybride Gänge, wobei sowohl Boosten als auch Rekuperieren möglich ist.
- Geschlossene erste Eingangsstufen-Kupplung 131 und geöffnete zweite Eingangsstufen-Kupplung 132. Bei dieser Schaltkonstellation wird das über die Eingangsstufen-Eingangswelle eingeleitete Moment der Verbrennungskraftmaschine über das Hohlrad 122 in den Eingangsstufen-Planetensatz 120 eingeleitet und über deren Eingangsstufen-Steg 123 an die Eingangsstufen-Ausgangswelle 104 ausgeleitet, wobei über die aufgrund der geschlossenen ersten Eingangsstufen-Kupplung 131 mit dem Rotor 112 verbundene Eingangsstufen-Sonne 121 eine variable Momentenabstützung erfolgt. Somit wird ein stufenloser Übersetzungsbereich in der Eingangsstufe 100 realisiert. Zusammen mit den vier in der Hauptstufe 200 realisierbaren Gängen ergeben sich vier stufenlose Übersetzungsbereiche.
- Geschlossene zweite Eingangsstufen-Kupplung 132 und geöffnete erste Eingangsstufen-Kupplung 131. Bei dieser Schaltkonstellation ist der Eingangsstufen-Planetensatz 120 aufgrund der freilaufenden Eingangsstufen-Sonne 121 wirkungslos geschaltet, sodass lediglich elektrisch erzeugtes Drehmoment vom Rotor 112 über die geschlossene zweite Eingangsstufen-Kupplung 132 an die Eingangsstufen-Ausgangswelle 104 geleitet wird. Zusammen mit den vier in der Hauptstufe 200 realisierbaren Gängen ergeben sich somit vier rein elektrische Gänge.

Insgesamt ergeben sich somit acht hybridische Gänge, davon vier klassisch parallelhybrid und vier stufenlos, sowie vier rein elektrische Gänge. Insbesondere bei Wahl der Schaltelemente als Lamellenkupplungen bzw. -bremsen sind alle Gänge lastschaltbar. Ein Anfahren kann elektrisch oder hybridisch mit "geared-neutral"-Funktion erfolgen. In den vier parallelhybriden Gängen ist eine Rekuperation jederzeit möglich. Ein Boosten ist in allen parallelhybriden Gängen möglich. Ebenso kann bei geschlossenen Eingangsstufen-Kupplungen 131, 132 und geöffneten Hauptstufen-Kupplungen 231, 232 ein generatorischer Betrieb der elektrischen Maschine 110 im Stand des Fahrzeugs, d.h. ein Standladen der elektrischen Energiespeicher, erfolgen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Antriebsstrang
- 100: Eingangsstufe
- 102: Eingangsstufen-Eingangswelle
- 104: Eingangsstufen-Ausgangswelle
- 110: elektrische Maschine
- 111: Stator
- 112: Rotor
- 120: Eingangsstufen-Planetensatz
- 121: Eingangsstufen-Sonne
- 122: Eingangsstufen-Hohlrad
- 123: Eingangsstufen-Steg
- 124: Eingangsstufen-Planet
- 131: erste Eingangsstufen-Kupplung
- 132: zweite Eingangsstufen-Kupplung
- 200: Hauptstufe
- 202: Hauptstufen-Eingangswelle
- 204: Hauptstufen-Ausgangswelle
- 220: Ravigneaux-Satz, Hauptstufen-Planetensatz
- 221a: erste Hauptstufen-Sonne
- 221b: zweite Hauptstufen-Sonne
- 222: Hauptstufen-Hohlrad
- 223: Hauptstufen-Steg
- 224a: Langplanet, erster Hauptstufen-Planet
- 224b: Kurzplanet, zweiter Hauptstufen-Planet
- 231: erste Hauptstufen-Kupplung
- 232: zweite Hauptstufen-Kupplung
- 241: erste Bremse
- 242: zweite Bremse

## Patentansprüche

1. Hybrid-Antriebsstrang für ein Kraftfahrzeug, umfassend eine eingangsseitig mit einer Verbrennungskraftmaschine koppelbare Eingangsstufe (100) und eine ausgangsseitig mit einem Differential gekoppelte oder koppelbare Hauptstufe (200), die in einem gemeinsamen Gehäuse angeordnet sind,
wobei die Eingangsstufe (100)
- eine mit der Verbrennungskraftmaschine koppelbare Eingangsstufen-Eingangswelle (102),
- eine elektrische Maschine (110) mit einem gehäusefesten Stator (111) und einem rotierbar in dem Stator (111) angeordneten Rotor (112) und
- einen Eingangsstufen-Planetensatz (120) mit einer mit dem Rotor (112) gekoppelten Eingangsstufen-Sonne (121), einem mit der Eingangsstufen-Eingangswelle (102) gekoppelten Eingangsstufen-Hohlrad (122) und einem mit einer Eingangsstufen-Ausgangswelle (104) gekoppelten Eingangsstufen-Steg (123), auf dem Eingangsstufen-Planeten (124), die mit der Eingangsstufen-Sonne (121) und dem Eingangsstufen-Hohlrad (122) kämmen, drehbar gelagert sind,
aufweist
und wobei die Hauptstufe (200)
- eine mit der Eingangsstufen-Ausgangswelle (104) gekoppelte Hauptstufen-Eingangswelle (202),
- einen Ravigneaux-Satz (220) mit einer ersten Hauptstufen-Sonne (221a), einer zweiten Hauptstufen-Sonne (221b), einem Hauptstufen-Hohlrad (222) und einem Hauptstufen-Steg (223), auf dem ein Satz erster Hauptstufen-Planeten (224a) und ein Satz zweiter Hauptstufen-Planeten (224b) drehbar gelagert sind, wobei die ersten Hauptstufen-Planeten (224a) einerseits mit der ersten Hauptstufen-Sonne (221a) und andererseits mit dem Hauptstufen-Hohlrad (222) und die zweiten Hauptstufen-Planeten (224b) einerseits mit den ersten Hauptstufen-Planeten (224a) und andererseits mit der zweiten Hauptstufen-Sonne (221b) kämmen, und
- eine mit einem Differential gekoppelte oder koppelbare Hauptstufen-Ausgangswelle (204), welche mit dem Hauptstufen-Steg (223) drehfest verbunden ist,
aufweist,
wobei das Hauptstufen-Hohlrad (222) mittels einer ersten Bremse (241) und die zweite Hauptstufen-Sonne (221b) mittels einer zweiten Bremse (242) am Gehäuse festlegbar ist,
**dadurch gekennzeichnet,**
**dass** die Hauptstufen-Eingangswelle (202) mittels einer ersten Hauptstufen-Kupplung (231) mit der ersten Hauptstufen-Sonne (221a) und mittels einer zweiten Hauptstufen-Kupplung (232) mit dem Hauptstufen-Hohlrad (222) gekoppelt ist.

2. Antriebsstrang nach Anspruch 1,
**dadurch gekennzeichnet,**
**dass** der Rotor (112) mittels einer ersten Eingangsstufen-Kupplung (131) mit der Eingangsstufen-Sonne (121) und mittels einer zweiten Eingangsstufen-Kupplung (132) mit dem Eingangsstufen-Steg (123) gekoppelt ist.

3. Antriebsstrang nach einem der vorangehenden Ansprüche,
**dadurch gekennzeichnet,**
**dass** die Standübersetzung des Eingangsstufen-Planetensatzes (120) negativ ist.

4. Antriebsstrang nach Anspruch 3,
**dadurch gekennzeichnet,**
**dass** die Standübersetzungen des Eingangsstufen-Planetensatzes (120) und des ersten Teilsatzes des Ravigneaux-Satzes (220), umfassend das Hauptstufen-Hohlrad (222), die ersten Hauptstufen-Planeten (224a) und die erste Hauptstufen-Sonne (221a), gleich sind.

5. Antriebsstrang nach Anspruch 4,
**dadurch gekennzeichnet,**
**dass** die Standübersetzung des zweiten Teilsatzes des Ravigneaux-Satzes (220), umfassend das Hauptstufen-Hohlrad (222), die zweiten Hauptstufen-Planeten (224b) und die zweite Hauptstufen-Sonne (221b), positiv ist und betragsmäßig dem 1,5-fachen der Standübersetzung des ersten Teilsatzes des Ravigneaux-Satzes (220) entspricht.

6. Verfahren zum Betrieb eines Antriebsstrangs (10) nach Anspruch 5, deren Eingangsstufen-Eingangswelle (102) mit einer Verbrennungskraftmaschine gekoppelt ist,
**dadurch gekennzeichnet,**
**dass** der Antriebsstrang (10) jeweils temporär
- mit geschlossener erster Eingangsstufen-Kupplung (131), geöffneter zweiter Eingangsstufen-Kupplung (132), geschlossener erster Bremse (241), geöffneter zweiter Bremse (242), geschlossener erster Hauptstufen-Kupplung (231) und geöffneter zweiter Hauptstufen-Kupplung (232) hybrid in einem ersten Gang,
- mit geschlossener erster Eingangsstufen-Kupplung (131), geschlossener zweiter Eingangsstufen-Kupplung (132), geschlossener erster Bremse (241), geöffneter zweiter Bremse (242), geschlossener erster Hauptstufen-Kupplung (231) und geöffneter zweiter Hauptstufen-Kupplung (232) hybrid in einem zweiten Gang,
- mit geschlossener erster Eingangsstufen-Kupplung (131), geöffneter zweiter Eingangsstufen-Kupplung (132), geöffneter erster Bremse (241), geschlossener zweiter Bremse (242), geschlossener erster Hauptstufen-Kupplung (231) und geöffneter zweiter Hauptstufen-Kupplung (232) hybrid in einem dritten Gang,
- mit geschlossener erster Eingangsstufen-Kupplung (131), geschlossener zweiter Eingangsstufen-Kupplung (132), geöffneter erster Bremse (241), geschlossener zweiter Bremse (242), geschlossener erster Hauptstufen-Kupplung (231) und geöffneter zweiter Hauptstufen-Kupplung (232) hybrid in einem vierten Gang,
- mit geschlossener erster Eingangsstufen-Kupplung (131), geöffneter zweiter Eingangsstufen-Kupplung (132), geöffneter erster Brems (241), geöffneter zweiter Bremse (242), geschlossener erster Hauptstufen-Kupplung (231) und geschlossener zweiter Hauptstufen-Kupplung (232) hybrid in einem fünften Gang,
- mit geschlossener erster Eingangsstufen-Kupplung (131), geschlossener zweiter Eingangsstufen-Kupplung (132), geöffneter erster Bremse (241), geöffneter zweiter Bremse (242), geschlossener erster Hauptstufen-Kupplung (231) und geschlossener zweiter Hauptstufen-Kupplung (232) hybrid in einem sechsten Gang,
- mit geschlossener erster Eingangsstufen-Kupplung (131), geöffneter zweiter Eingangsstufen-Kupplung (132), geöffneter erster Bremse (241), geschlossener zweiter Bremse (242), geöffneter erster Hauptstufen-Kupplung (231) und geschlossener zweiter Hauptstufen-Kupplung (232) hybrid in einem siebten Gang und
- mit geschlossener erster Eingangsstufen-Kupplung (131), geschlossener zweiter Eingangsstufen-Kupplung (132), geöffneter erster Bremse (241), geschlossener zweiter Bremse (242), geöffneter erster Hauptstufen-Kupplung (231) und geschlossener zweiter Hauptstufen-Kupplung (232) hybrid in einem achten Gang,
betrieben wird.

7. Verfahren nach Anspruch 6,
**dadurch gekennzeichnet,**
**dass** zum Hochschalten aus einem ungeraden, hybriden Gang in den nächsthöheren geraden, hybriden Gang zunächst die Drehzahl der Verbrennungskraftmaschine auf das nach der Schaltung benötigte Drehzahlniveau abgesenkt wird, während zugleich die Drehzahl der elektrischen Maschine (110) entsprechend erhöht wird, wonach die zweite Eingangsstufen-Kupplung (132) schlupfend geschlossen und dabei die Drehzahl der elektrischen Maschine (110) dem Drehzahlniveau der Verbrennungskraftmaschine angepasst wird.

8. Verfahren nach einem der Ansprüche 6 bis 7,
**dadurch gekennzeichnet,**
**dass** zum Runterschalten aus einem geraden, hybriden Gang in den nächstniedrigeren ungeraden, hybriden Gang zunächst die zweite Eingangsstufen-Kupplung (132) schlupfend geöffnet und dabei die Drehzahl der Verbrennungskraftmaschine auf das nach der Schaltung benötigte Drehzahlniveau angehoben wird, während zugleich die Drehzahl der elektrischen Maschine (110) entsprechend abgesenkt wird.

9. Verfahren nach einem der Ansprüche 6 bis 8,
**dadurch gekennzeichnet,**
**dass**, ausgehend von einem Zustand, in dem die Drehzahl der elektrischen Maschine (110) derart an die Drehzahl der Verbrennungskraftmaschine angepasst ist, dass die Eingangsstufen-Ausgangswelle (104) steht, die Drehzahl der elektrischen Maschine (110) in Abhängigkeit von der Drehzahl der Verbrennungskraftmaschine derart geregelt wird, dass die Eingangsstufen-Ausgangswelle (104) in kontinuierlich beschleunigte Rotation versetzt wird.

10. Verfahren nach einem der Ansprüche 6 bis 9,
**dadurch gekennzeichnet,**
**dass** der Antriebsstrang (10) jeweils temporär
- mit geöffneter erster Eingangsstufen-Kupplung (131), geschlossener zweiter Eingangsstufen-Kupplung (132), geschlossener erster Bremse (241), geöffneter zweiter Bremse (242), geschlossener erster Hauptstufen-Kupplung (231) und geöffneter zweiter Hauptstufen-Kupplung (232) elektrisch im zweiten Gang,
- mit geöffneter erster Eingangsstufen-Kupplung (131), geschlossener zweiter Eingangsstufen-Kupplung (132), geöffneter erster Bremse (241), geschlossener zweiter Bremse (242), geschlossener erster Hauptstufen-Kupplung (231) und geöffneter zweiter Hauptstufen-Kupplung (232) elektrisch im vierten Gang,
- mit geöffneter erster Eingangsstufen-Kupplung (131), geschlossener zweiter Eingangsstufen-Kupplung (132), geöffneter erster Bremse (241), geöffneter zweiter Bremse (242), geschlossener erster Hauptstufen-Kupplung (231) und geschlossener zweiter Hauptstufen-Kupplung (232) elektrisch im sechsten Gang,
- mit geöffneter erster Eingangsstufen-Kupplung (131), geschlossener zweiter Eingangsstufen-Kupplung (132), geöffneter erster Bremse (241), geschlossener zweiter Bremse (242), geöffneter erster Hauptstufen-Kupplung (231) und geschlossener zweiter Hauptstufen-Kupplung (232) elektrisch im achten Gang,
betrieben wird.

11. Verfahren nach Anspruch 9, wobei der Antriebsstrang (10) aktuell elektrisch im zweiten Gang mit stehender Verbrennungskraftmaschine betrieben wird,
**dadurch gekennzeichnet,**
**dass** zum Starten der Verbrennungskraftmaschine zunächst die erste Hauptstufen-Kupplung (241) zum schlupfenden Betrieb geöffnet wird, während die Drehzahl der elektrischen Maschine (110) entsprechend erhöht wird, und sodann die erste Hauptstufen-Kupplung (241) geschlossen und die elektrische Maschine (110) auf eine Drehmomentregelung umgeschaltet wird.

## Claims

1. A hybrid drive train for a motor vehicle, comprising an input stage (100) which can be coupled on the input side with an internal combustion engine and a main stage (200) which is coupled or can be coupled on the output side with a differential, which are arranged in a common housing,
wherein the input stage (100) has
- an input stage-input shaft (102) which can be coupled with the internal combustion engine,
- an electric machine (110) with a housing-fixed stator (111) and a rotor (112) arranged rotatably in the stator (111) and
- an input stage-planetary gear set (120) with an input stage sun (121) coupled with the rotor (112), an input stage-hollow wheel (122) coupled with the input stage-input shaft (102) and an input stage web (123) coupled with an input stage-output shaft (104), on which input stage planets (124), which intermesh with the input stage sun (121) and the input stage-hollow wheel (122) are rotatably mounted and wherein the main stage (200) has
- a main stage-input shaft (202) coupled with the input stage-output shaft (104),
- a Ravigneaux set (220) with a first main stage-sun (221a), a second main stage-sun (221b), a main stage-hollow wheel (222) and a main stage-web (223), on which a set of first main stage-planets (224a) and a set of second main stage-planets (224b) are rotatably mounted, wherein the first main stage-planets (224a), on the one hand, intermesh with the first main stage-sun (221a) and, on the other hand, with the main stage-hollow wheel (222) and the second main stage-planets (224b), on the one hand, with the first main stage planets (224a) and, on the other hand, with the second main stage-sun (221b), and
- a main stage-output shaft (204) which is coupled or can be coupled with a differential, which is connected in a rotationally fixed manner to the main stage-web (223),
wherein the main stage-hollow wheel (222) can be fixed to the housing by means of a first brake (241) and the second main stage-sun (221b) by means of a second brake (242),
**characterized in**
**that** the main stage-input shaft (202) is coupled by means of a first main stage-coupling (231) with the first main stage-sun (221a) and by means of a second main stage-coupling (232) with the main stage-hollow wheel (222).

2. A drive train according to Claim 1
**characterized in**
**that** the rotor (112) is coupled by means of a first input stage-coupling 131) with the input stage -sun (121) and by means of a second input stage-coupling (132) with the input stage-web (123).

3. A drive train according to any one of the preceding claims,
**characterized in**
**that** the stationary gear ratio of the input stage-planet set (120) is negative.

4. A drive train according to Claim 3,
**characterized in**
**that** the stationary gear ratios of the input stage-planet set (120) and the first subset of the Ravigneaux set (220), comprising the main stage-hollow wheel (222), the first main stage-planets (224a) and the first main stage-sun (221a), are equal.

5. A drive train according to Claim 4,
**characterized in**
**that** the stationary gear ratio of the second subset of the Ravigneaux set (220), comprising the main stage-hollow wheel (222), the second main stage-planets (224b) and the second main stage-sun (221b) is positive and according to the amount corresponds to 1.5 times the stationary gear ratio of the first subset of the Ravigneaux set (220).

6. A method for operating a drive train (10) according to Claim 5, the input stage-input shaft (102) of which is coupled to an internal combustion engine,
**characterized in**
**that** the drive train (10) is operated in each case temporarily
- with closed first input stage-coupling (131), opened second input stage-coupling (132) closed first brake (241), opened second brake (242), closed first main stage-coupling (231) and opened second main stage-coupling (232) in a hybrid manner in a first gear,
- with closed first input stage-coupling (131), closed second input stage-coupling (132), closed first brake (241), opened second brake (242), closed first man stage-coupling (231) and opened second main stage-coupling (232) in a hybrid manner in a second gear,
- with closed first input stage-coupling (131), opened second input stage-coupling (132), opened first brake (241), closed second brake (242), closed first main stage-coupling (231) and opened second main stage-coupling (232) in a hybrid manner in a third gear,
- with closed first input stage-coupling (131), closed second input stage-coupling (132), opened first brake (241), closed second brake (242), closed first main stage-coupling (231) and opened second main stage-coupling (232) in a hybrid manner in a fourth gear,
- with closed first input stage-coupling (131), opened second input stage-coupling (132), opened first brake (241), opened second brake (242), closed first main stage-coupling (231) and closed second main stage-coupling (232) in a hybrid manner in a fifth gear,
- with closed first input stage-coupling (131), closed second input stage-coupling (132), closed first brake (241), opened second brake (242), closed first main stage-coupling (231) and closed second main stage-coupling (232) in a hybrid manner in a sixth gear,
- with closed first input stage-coupling (131), opened second input stage-coupling (132), opened first brake (241), closed second brake (242), opened first main stage-coupling (231) and closed second main stage-coupling (232) in a hybrid manner in a seventh gear and
- with closed first input stage-coupling (131), closed second input stage-coupling 132), opened first brake (241), closed second brake (242, opened first main stage-coupling (231) and closed second main stage-coupling (232) in a hybrid manner in an eighth gear.

7. A method according to Claim 6,
**characterized in**
**that** to upshift from an odd, hybrid gear to the next higher even, hybrid gear initially the speed of the internal combustion engine is lowered to the speed level required after switching, while at the same time the speed of the electric machine (110) is correspondingly increased, after which the second input stage-coupling (132) is closed with slippage and thereby the speed of the electric machine (110) is adapted to the speed level of the internal combustion engine.

8. A method according to any one of Claims 6 to 7,
**characterized in**
**that** to downshift from an odd, hybrid gear to the next lower even, hybrid gear initially the second input stage-coupling (132) is opened with slippage and thereby the speed of the internal combustion engine is raised to the speed level required after switching, while at the same time the speed of the electric machine (110) is correspondingly lowered.

9. A method according to any one of Claims 6 to 8,
**characterized in**
**that**, starting from a state, in which the speed of the electric machine (110) is adapted to the speed of the internal combustion engine in such a manner that the input stage-output shaft (104) is stationary, the speed of the electric machine (110) is controlled in dependence on the speed of the internal combustion engine in such a manner that the input stage-output shaft (104) is set in continuously accelerated rotation.

10. A method according to any one of Claims 6 to 9,
**characterized in**
**that** the drive train (10) is operated in each case temporarily
- with opened first input stage-coupling 131), closed second input stage-coupling (132), closed first brake (241), opened second brake (242), closed first main stage-coupling (231) and opened second main stage-coupling (232) electrically in the second gear,
- with opened first input stage-coupling (131), closed second input stage-coupling (132), opened first brake (241), closed second brake (242), closed first main stage-coupling (231) and opened second main stage-coupling (232) electrically in the fourth gear,
- with opened first input stage-coupling 131), closed second input stage-coupling (132), opened first brake (241) opened second brake (242), closed first main stage-coupling (231) and closed second main stage-coupling 232) electrically in the sixth gear,
- withy opened first input stage-coupling (131), closed second input stage-coupling (132), opened first brake (241), closed second brake (242), opened first main stage-coupling (231) and closed second main stage-coupling (232) electrically in the eighth gear.

11. A method according to Claim 9, wherein the drive train (10) is operated currently electrically in the second gear with stationary internal combustion engine,
**characterized in**
**that** to start the internal combustion engine initially the first main stage-coupling (241) is opened for operation with slippage, while the speed of the electric machine (110) is correspondingly increased, and then the first main stage-coupling (241) is closed and the electric machine (110) is switched to a torque control.

## Revendications

1. Groupe motopropulseur hybride pour un véhicule automobile, comprenant un étage d'entrée (100), pouvant être couplé côté entrée avec un moteur à combustion interne, et un étage principal (200), couplé ou pouvant être couplé côté sortie avec un différentiel, qui sont disposés dans un boîtier commun,
l'étage d'entrée (100) comportant
- un arbre d'entrée (102) d'étage d'entrée pouvant être couplé avec le moteur à combustion interne,
- un moteur électrique (110) avec un stator (111) fixe par rapport au boîtier et un rotor (112) disposé de façon rotative dans le stator (111), et
- un train planétaire (120) d'étage d'entrée avec un soleil (121) d'étage d'entrée couplé avec le rotor (112), une couronne (122) d'étage d'entrée couplée avec l'arbre d'entrée (102) d'étage d'entrée et un porte-satellite (123) d'étage d'entrée, couplé avec un arbre de sortie (104) d'étage d'entrée, sur lequel des planètes (124) d'étage d'entrée qui engrènent avec le soleil (121) d'étage d'entrée et la couronne (122) d'étage d'entrée sont supportées en rotation,
et l'étage principal (200) comportant
- un arbre d'entrée (202) d'étage principal couplé avec l'arbre de sortie (104) d'étage d'entrée,
- un train Ravigneaux (220) avec un premier soleil (221a) d'étage principal, un deuxième soleil (221b) d'étage principal, une couronne (222) d'étage principal et un porte-satellite (223) d'étage principal sur lequel un train de premières planètes (224a) d'étage principal et un train de deuxièmes planètes (224b) d'étage principal sont supportés en rotation, les premières planètes (224a) d'étage principal engrenant d'un côté avec le premier soleil (221a) d'étage principal et de l'autre côté avec la couronne (222) d'étage principal, et les deuxièmes planètes (224b) d'étage principal engrenant d'un côté avec les premières planètes (224a) d'étage principal et de l'autre côté avec le deuxième soleil (221b) d'étage principal, et
- un arbre de sortie (204) d'étage principal, couplé ou pouvant être couplé avec un différentiel, qui est raccordé bloqué en rotation au porte-satellite (223) d'étage principal,
la couronne (222) d'étage principal pouvant être immobilisée sur le boîtier au moyen d'un premier frein (241), et le deuxième soleil (221b) d'étage principal pouvant être immobilisé sur le boîtier au moyen d'un deuxième frein (242),
**caractérisé en ce que**
l'arbre d'entrée (202) d'étage principal est couplé avec le premier soleil (221a) d'étage principal au moyen d'un premier accouplement (231) d'étage principal et couplé avec la couronne (222) d'étage principal au moyen d'un deuxième accouplement (232) d'étage principal.

2. Groupe motopropulseur selon la revendication 1,
**caractérisé en ce que**
le rotor (112) est couplé avec le soleil (121) d'étage d'entrée au moyen d'un premier accouplement (131) d'étage d'entrée et est couplé avec le porte-satellite (123) d'étage d'entrée au moyen d'un deuxième accouplement (132) d'étage d'entrée.

3. Groupe motopropulseur selon l'une des revendications précédentes,
**caractérisé en ce que**
le rapport de transmission à l'arrêt du train planétaire (120) d'étage d'entrée est négatif.

4. Groupe motopropulseur selon la revendication 3,
**caractérisé en ce que** les rapports de transmission à l'arrêt du train planétaire (120) d'étage d'entrée et du premier train partiel du train Ravigneaux (220), comprenant la couronne (222) d'étage principal, les premières planètes (224a) d'étage principal et le premier soleil (221a) d'étage principal, sont identiques.

5. Groupe motopropulseur selon la revendication 4,
**caractérisé en ce que** le rapport de transmission à l'arrêt du deuxième train partiel du train Ravigneaux (220) comprenant la couronne (222) d'étage principal, les deuxièmes planètes (224b) d'étage principal et le deuxième soleil (221b) d'étage principal est positif et correspond quantitativement à 1,5 fois le rapport de transmission à l'arrêt du premier train partiel du train Ravigneaux (220).

6. Procédé destiné à faire fonctionner un groupe motopropulseur (10) selon la revendication 5, dont l'arbre d'entrée (102) d'étage d'entrée est couplé avec un moteur à combustion interne,
**caractérisé en ce que**
le groupe motopropulseur (10) est mis en fonctionnement respectivement de façon temporaire
- en mode hybride en première avec un premier accouplement (131) d'étage d'entrée fermé, un deuxième accouplement (132) d'étage d'entrée ouvert, un premier frein (241) fermé, un deuxième frein (242) ouvert, un premier accouplement (231) d'étage principal fermé et un deuxième accouplement (232) d'étage principal ouvert,
- en mode hybride en seconde avec un premier accouplement (131) d'étage d'entrée fermé, un deuxième accouplement (132) d'étage d'entrée fermé, un premier frein (241) fermé, un deuxième frein (242) ouvert, un premier accouplement (231) d'étage principal fermé et un deuxième accouplement (232) d'étage principal ouvert,
- en mode hybride en troisième avec un premier accouplement (131) d'étage d'entrée fermé, un deuxième accouplement (132) d'étage d'entrée ouvert, un premier frein (241) ouvert, un deuxième frein (242) fermé, un premier accouplement (231) d'étage principal fermé et un deuxième accouplement (232) d'étage principal ouvert,
- en mode hybride en quatrième avec un premier accouplement (131) d'étage d'entrée fermé, un deuxième accouplement (132) d'étage d'entrée fermé, un premier frein (241) ouvert, un deuxième frein (242) fermé, un premier accouplement (231) d'étage principal fermé et un deuxième accouplement (232) d'étage principal ouvert,
- en mode hybride en cinquième avec un premier accouplement (131) d'étage d'entrée fermé, un deuxième accouplement (132) d'étage d'entrée ouvert, un premier frein (241) ouvert, un deuxième frein (242) ouvert, un premier accouplement (231) d'étage principal fermé et un deuxième accouplement (232) d'étage principal fermé,
- en mode hybride en sixième avec un premier accouplement (131) d'étage d'entrée fermé, un deuxième accouplement (132) d'étage d'entrée fermé, un premier frein (241) ouvert, un deuxième frein (242) ouvert, un premier accouplement (231) d'étage principal fermé et un deuxième accouplement (232) d'étage principal fermé,
- en mode hybride en septième avec un premier accouplement (131) d'étage d'entrée fermé, un deuxième accouplement (132) d'étage d'entrée ouvert, un premier frein (241) ouvert, un deuxième frein (242) fermé, un premier accouplement (231) d'étage principal ouvert et un deuxième accouplement (232) d'étage principal fermé, et
- en mode hybride en huitième avec un premier accouplement (131) d'étage d'entrée fermé, un deuxième accouplement (132) d'étage d'entrée fermé, un premier frein (241) ouvert, un deuxième frein (242) fermé, un premier accouplement (231) d'étage principal ouvert et un deuxième accouplement (232) d'étage principal fermé.

7. Procédé selon la revendication 6,
**caractérisé en ce que**, pour le passage à un rapport supérieur à partir d'un rapport hybride impair vers le rapport hybride pair immédiatement supérieur, le régime du moteur à combustion interne est d'abord abaissé au niveau de régime nécessaire après le changement de rapport tandis que dans le même temps le régime du moteur électrique (110) est augmenté en conséquence, après quoi le deuxième accouplement (132) d'étage d'entrée est fermé de façon glissante et en même temps le régime du moteur électrique (110) est adapté au niveau de régime du moteur à combustion interne.

8. Procédé selon l'une des revendications 6 à 7,
**caractérisé en ce que**, pour le passage à un rapport inférieur à partir d'un rapport hybride pair vers le rapport hybride impair immédiatement inférieur, le deuxième accouplement (132) d'étage d'entrée est ouvert de façon glissante et en même temps le régime du moteur à combustion interne est élevé au niveau de régime nécessaire après le changement de rapport tandis que dans le même temps le régime du moteur électrique (110) est abaissé en conséquence.

9. Procédé selon l'une des revendications 6 à 8,
**caractérisé en ce que**,
à partir d'un état dans lequel le régime du moteur électrique (110) est adapté au régime du moteur à combustion interne de telle sorte que l'arbre de sortie (104) d'étage d'entrée est immobile, le régime du moteur électrique (110) est régulé en fonction du régime du moteur à combustion interne de telle sorte que l'arbre de sortie (104) d'étage d'entrée est mis en rotation accélérée de façon continue.

10. Procédé selon l'une des revendications 6 à 9,
**caractérisé en ce que**
le groupe motopropulseur (10) est mis en fonctionnement respectivement de façon temporaire
- électriquement en seconde avec un premier accouplement (131) d'étage d'entrée ouvert, un deuxième accouplement (132) d'étage d'entrée fermé, un premier frein (241) fermé, un deuxième frein (242) ouvert, un premier accouplement (231) d'étage principal fermé et un deuxième accouplement (232) d'étage principal ouvert,
- électriquement en quatrième avec un premier accouplement (131) d'étage d'entrée ouvert, un deuxième accouplement (132) d'étage d'entrée fermé, un premier frein (241) ouvert, un deuxième frein (242) fermé, un premier accouplement (231) d'étage principal fermé et un deuxième accouplement (232) d'étage principal ouvert,
- électriquement en sixième avec un premier accouplement (131) d'étage d'entrée ouvert, un deuxième accouplement (132) d'étage d'entrée fermé, un premier frein (241) ouvert, un deuxième frein (242) ouvert, un premier accouplement (231) d'étage principal fermé et un deuxième accouplement (232) d'étage principal fermé,
- électriquement en huitième avec un premier accouplement (131) d'étage d'entrée ouvert, un deuxième accouplement (132) d'étage d'entrée fermé, un premier frein (241) ouvert, un deuxième frein (242) fermé, un premier accouplement (231) d'étage principal ouvert et un deuxième accouplement (232) d'étage principal fermé.

11. Procédé selon la revendication 9, le groupe motopropulseur (10) étant actuellement mis en fonctionnement électriquement en seconde avec le moteur à combustion interne immobile,
**caractérisé en ce que**,
pour le démarrage du moteur à combustion interne, le premier accouplement (241) d'étage principal pour le fonctionnement glissant est ouvert tandis que le régime du moteur électrique (110) est augmenté en conséquence, et ensuite le premier accouplement (241) d'étage principal est fermé et le moteur électrique (110) est commuté vers une régulation du couple.
